# EUROPÄISCHE PATENTANMELDUNG

(11) **EP 1 271 884 A2**
(43) Veröffentlichungstag der Anmeldung: **02.01.2003**
(21) Anmeldenummer: 02013206.4
(22) Anmeldetag: 15.06.2002
(51) Int. Cl.: H04L 29/06, H02J 13/00

(54) **System zum Überwachen und Bedienen von automatisch arbeitenden Anlägen**

(30) Priorität: 22.06.2001 DE 10130309
(71) Anmelder: MES GmbH, 24558 Henstedt-Ulzburg (DE)
(72) Erfinder: Adam, Dirk, 22339 Hamburg (DE)
(74) Vertreter: Jaeschke, Rainer, Dipl.-Ing.

(57) **Zusammenfassung**

Die Erfindung betrifft ein System zum Überwachen und Bedienen von automatisch arbeitenden Anlagen. Insbesondere betrifft die Erfindung ein System zum Überwachen und Bedienen von örtlich verteilten Energieerzeugungsanlagen. Gemäß der Erfindung wird vorgeschlagen, daß wenigstens eine zentrale Datenverarbeitungsanlage mit wenigstens einem Speichermittel vorhanden ist, die über wenigstens eine erste etablierbare Telekommunikationsleitung mit wenigstens einer Aus- und/oder Eingabeeinheit der zu überwachenden und/oder zu bedienenden Anlage in Verbindung bringbar ist, um wenigstens einen Datensatz über den Betriebszustand der Anlage in die Datenverarbeitungsanlage zu übermitteln und in dem Speichermittel abzulegen, und die über wenigstens eine zweite Telekommunikationsleitung mit wenigstens einem Ein- und/oder Ausgabeendgerät eines Nutzers in Verbindung bringbar ist, durch welches Endgerät der Zugriff zumindest auf das Speichermittel zum Abrufen des Datensatzes einer Anlage möglich ist. Hierdurch ist ein Mißbrauch und eine versehentliche Manipulation der Anlagen im wesentlichen ausgeschlossen.

## Beschreibung

Die Erfindung betrifft ein System zum Überwachen und Bedienen von einer Vielzahl von automatisch arbeitenden Anlagen. Insbesondere betrifft die Erfindung ein System zum Überwachen und Bedienen von örtlich verteilten Energieerzeugungsanlagen, so daß im folgenden überwiegend von solchen Anlagen gesprochen wird, ohne daß damit eine Beschränkung verbunden sein soll.

Insbesondere im Zuge der Ausnutzung von erneuerbaren Energien, ist es bekannt und teilweise erforderlich, mehrere kleine Energieerzeugsanlagen örtlich verteilt zur Einspeisung in ein Netz oder zur Versorgung kleinerer Anlagen oder Gemeinden vorzusehen. Entsprechendes gilt für automatisierte Produktionsanlagen oder Verbraucheranlagen, wie Gebäudekomplexe, Wärmeerzeugungsanlagen. Allen Anlagen ist gemeinsam, daß diese häufig automatisch betrieben werden und kein Personal vor Ort die Anlage überwacht. Dennoch ist es erforderlich, den Betriebszustand einer solchen Anlage überwachen und eventuell Eingriff hierauf nehmen zu können.

Aus der DE 198 43 324 C2 ist es bekannt, Datensätze eines Netzwerkelementes über ein globales Netzwerk, beispielsweise das Internet, zu einem Benutzer-PC zu übermitteln. Dieses Netzwerkelement kann Teil einer automatischen Anlage der eingangs geschilderten Art sein, die zu überwachen ist. Der Nachteil ist bei der Ausnutzung eines globalen Datennetzwerks darin zu sehen, daß es allgemein zugänglich ist, so daß eine unbeabsichtigte und/oder beabsichtigte Manipulation der hierdurch übertragenen Daten nicht ausgeschlossen werden kann. Ein ähnliches System ist aus der US 6,157,943 bekannt. Aus der DE 199 04 331 C1 ist es daher bekannt, daß nicht nur eine Telekommunikationsverbindung über ein solches globales Datennetzwerk etabliert wird, sondern das zwei Übertragungskanäle vorhanden sind. Eine Manipulation der Daten des Netzwerkelementes kann somit erschwert werden. Dennoch bestehen die Gefahr und die Möglichkeit, daß über das globale Datennetzwerk, das von jeder beliebigen Stelle von jedem Dritten zugänglich ist, Eingriff auf die zu überwachende Anlage genommen wird. Insbesondere ist es bei den vorbekannten Überwachungssystemen stets erforderlich, daß eine direkte Verbindung zwischen Nutzer und Anlage aufgebaut wird.

Der Erfindung liegt die Aufgabe zugrunde, ein System zum Überwachen und Bedienen von automatisch arbeitenden Anlagen zu schaffen, mit der die örtlich verteilten Anlagen überwacht und/oder bedient werden können, ohne daß die Gefahr einer beabsichtigten und/oder unbeabsichtigten Manipulation durch Dritte besteht.

Die Aufgabe wird gemäß der Erfindung dadurch gelöst, daß wenigstens eine zentrale Datenverarbeitungsanlage mit wenigstens einem Speichermittel vorhanden ist, die über wenigstens eine erste etablierbare Telekommunikationsleitung mit wenigstens einer Aus- und/oder Eingabeeinheit der zu überwachenden und/oder zu bedienenden Anlage in Verbindung bringbar ist, um wenigstens einen Datensatz über den Betriebszustand der Anlage in die Datenverarbeitungsanlage zu übermitteln und in dem Speichermittel abzulegen, und die über wenigstens eine zweite Telekommunikationsleitung mit wenigstens einem Ein- und/oder Ausgabeendgerät eines Nutzers in Verbindung bringbar ist, durch welches Endgerät der Zugriff zumindest auf das Speichermittel zum Abrufen des Datensatzes der beobachteten betreffenden Anlage möglich ist. Es ist hier vorgesehen, daß die Datensätze des Betriebszustandes der überwachten Anlagen nicht unmittelbar durch eine oder mehrere Telekommunikationsleitungen von der zu beobachtenden Anlage zum Endgerät eines Nutzers zu übermittelt werden müssen. Vielmehr werden die betreffenden Datensätze zunächst in einem Speichermittel abgelegt. Nur auf dieses Speichermittel hat der Nutzer Zugriff. Das Speichermittel kann hier als ein vom Nutzer nicht editierbarer Speicher ausgebildet sein, so daß die Daten der beobachteten Anlagen tatsächlich nur angesehen werden können. Es ist somit zunächst nicht erforderlich und auch nicht möglich, daß der Nutzer zum Betrachten des Betriebszustandes unmittelbar eine Verbindung zu den jeweiligen Anlagen aufbaut. Es ist offensichtlich, daß hierdurch bereits ein Mißbrauch und eine versehentliche Manipulation der zu überwachenden Anlagen im wesentlichen ausgeschlossen ist.

Durch das Vorsehen einer zentralen Datenverarbeitungsanlage, die über eine Telekommunikationsleitung anwählbar ist, kann zudem auf ein globales Datennetzwerk verzichtet werden. Hierdurch wird verhindert, daß beliebige Dritte auf die zentrale Datenverarbeitungsanlage zugreifen können. Die Sicherheit kann somit weiter erhöht werden. Die Telekommunikationsleitung kann ein vorhandenes Telekommunikationsnetzwerk umfassen, das in herkömmlicher Weise Satelliten- und Funk- sowie Kabelübertragungsstrecken und auch ein Intranet einschließt. Insbesondere ist vorgesehen, daß die zu überwachende Anlagen, die zentrale Datenverarbeitungsanlage und der Nutzer Teilnehmer eines Netzwerkes sind, wodurch die Kommunikation wesentlich erleichtert wird.

Gemäß einer bevorzugten Ausführungsform der Erfindung ist vorgesehen, daß die zentrale Datenverarbeitungsanlage wenigstens einen Zeitgeber und/oder eine Routine umfaßt, um periodisch und/oder zu vorgebbaren Zeiten die Datensätze der zu überwachenden Anlagen abzurufen und in dem Speichermittel abzulegen. Dies hat den Vorteil, daß eine im wesentlichen laufende oder zyklische Überwachung einer Vielzahl von Anlagen zentral erfolgen kann. Der Nutzer braucht nur zu einem ihm passenden Zeitpunkt über die zweite Telekommunikationsleitung auf das Speichermittel der zentralen Datenverarbeitungsanlage zuzugreifen, um den oder die Betriebszustände der letzten Zeit kontrollieren zu können. Das Überwachen und Beobachten solcher automatisch arbeitenden Anlagen wird somit wesentlich vereinfacht. Dennoch ist die zu überwachende Anlage selbst für den Beobachter nicht zu erreichen, und ein Zugriff ist nicht möglich.

Ein weiterer Vorteil bei diesem von der zentralen Datenverarbeitung ausgehenden Abrufen der Datensätze besteht darin, dass beim Abrufen die Funktion der zu etablierenden Telekommunikationsleitung geprüft wird. Kann zum Abrufen der Datensätze keine oder nur eine unzureichende Verbindung aufgebaut werden, kann eine Alarmmeldung erfolgen. Es wird die Gefahr vermieden, dass eine Anlage übersehen wird, weil keine Datensätze übermittelt worden sind. Entsprechendes gilt auch dann, wenn das Anwählen anlagenseitig erfolgt. Hier kann die zentrale Datenverarbeitung so programmiert sein, dass bei einem Nichtempfang von Daten nach einer bestimmten Zeit oder innerhalb eines vorgebbaren Zeitfensters ebenfalls eine Alarmmeldung erfolgt oder seitens der Datenverarbeitungsanlage versucht wird, eine Telekommunikationsverbindung aufzubauen, um anschließend eventuell einen Alarm zu erzeugen. Die Sicherheit der Überwachung wird erhöht, und die Vollständigkeit der Überwachung wird gewährleistet.

Es kann vorgesehen werden, daß die zentrale Datenverarbeitungsanlage wenigstens eine Auswerteeinheit umfaßt, um die abgerufenen Datensätze der Anlagen auszuwerten und/oder aufzuarbeiten, und daß die ausgewerteten und/oder aufbereiteten Datensätze in dem Speichermittel für den Zugriff durch den Nutzer abgelegt werden. Dies hat den weiteren Vorteil, daß der Nutzer unmittelbar nach dem Abruf der Datensätze eine für ihn verwertbare Darstellung des Betriebszustandes der Anlage erhält. Insbesondere kann vorgesehen werden, daß die Auswerteeinheit mehrere auf einander folgende Datensätze verarbeitet und beispielsweise in einer zeitabhängigen Darstellungsform in dem Speichermittel ablegt.

Es kann zudem vorgesehen werden, daß die Auswerteeinheit und/oder die zentrale Datenverarbeitungsanlage eine Alarmfunktion umfaßt, die bei Überschreiten vorgebbarer Grenzwerte wenigstens einen Nutzer zum Auslösen eines Alarms über die zweite Telekommunikationsleitung anwählt. Dies hat den Vorteil, daß kritische Betriebszustände der Anlagen im Rahmen der periodischen Überwachung schnell erkannt werden können.

Die periodische Überwachung, in der alle Daten abgerufen werden, wird sich jedoch häufig über Zeiträume erstrecken, die nicht ausreichen, um rechtzeitig auf einen kritische Zustand reagieren zu können. Es ist daher gemäß einer weitergehenden Ausführungsform der Erfindung vorgesehen, daß die zentrale Datenverarbeitungsanlage wenigstens einen zweiten Zeitgeber und/oder eine zweite Routine umfaßt, um periodisch und/oder zu vorgebbaren Zeiten eine vorgebbare Auswahl von Daten der Anlagen abzurufen, auf einen Alarmzustand hin zu überprüfen und in dem Speichermittel abzulegen. Der zweite Zeitgeber oder die zweite Routine kann so eingestellt sein, daß die Abfrage der Auswahl der Daten in kürzeren Zeitabständen erfolgt. Diese Auswahl der Daten können auf solche Daten und Meßwerte beschränkt werden, die bei Überschreiten von Grenzwerten ein Abschalten der Anlage bewirken. Dies hat den den Vorteil, daß die statistischen Daten beispielsweise alle 24 Stunden, die kritischen Daten jedoch alle Stunde abgerufen werden. Somit kann die Überwachung noch komfortabler gestaltet werden. Dennoch kann im Ernstfall hinreichend schnell ein Alarm ausgelöst werden.

Es ist günstig, wenn auch die Aus- und/oder Eingabeeinheit der Anlage ein Speichermittel umfaßt, in dem die Datensätze zum Abruf durch die zentrale Datenverarbeitungsanlage ablegbar sind. Dies hat den Vorteil, daß die erforderliche Datenübertragungszeit sehr kurz gehalten werden kann, da nur ein Inhalt eines Speichers, beispielsweise eine Datei, abgerufen und übertragen wird.

Grundsätzlich ist es zweckmäßig, wenn die zentrale Datenverarbeitungsanlage von der Aus- und/oder Eingabeeinheit der Anlage selbsttätig und/oder manuell anwählbar ist. Insbesondere kann hier vorgesehen werden, daß die Aus- und/oder Eingabeeinheit eine Alarmfunktion umfaßt, die bei Überschreiten vorgebbare Grenzwerte die zentrale Datenverarbeitungsanlage zum Auslösen eines Alarms über die erste Telekommunikationsleitung anwählt.

Hierdurch wird erreicht, daß kritische Betriebszustände der zu überwachenden Anlagen nicht erst bei Abruf des entsprechenden Datensatzes durch den Nutzer sonders bereits vorher erfaßt werden können. Durch die Möglichkeit der manuellen Anwählbarkeit der zentralen Datenverarbeitungsanlage kann vorgesehen werden, daß das Personal nach der Kontrolle oder Wartung einer Anlage den aktuellen Datensatz des Betriebszustandes an die zentrale Datenverarbeitungsanlage übermittelt. Dort kann der Datensatz zur weiteren Prüfung von einem beliebigen Nutzer an einem anderen Ort abgerufen werden.

Weiterhin ist es günstig, wenn ein erfaßter Alarm von der zentralen Datenverarbeitungsanlage an wenigstens ein Endgerät eines Nutzes unmittelbar weitergeleitet wird. Das Endgerät kann hierbei entweder ein PC sein, oder aber beispielsweise ein Telefaxgerät, das nicht nur den Alarm sondern auch den Standort und den Betriebszustand der überwachten Anlage ausdruckt. Auch kann das Endgerät ein Mobilfunktelefon sein, auf dessen Display der Alarm und eventuell auch eine Standort- und Fehleridentifizierung angezeigt werden kann. Hierdurch können die Fehlererkennung und die Fehlerortung beschleunigt werden.

Grundsätzlich ist es zweckmäßig, wenn durch das Endgerät des Nutzers die erste Telekommunikationsleitung etablierbar ist, um unmittelbar einen Datensatz über die aktuellen Status einer Anlage abrufen zu können. Grundsätzlich kann auch vorgesehen werden, daß der Betriebszustand dann laufend auf dem Endgerät des Nutzers angezeigt wird. Dies kann für eine Ferndiagnose zweckmäßig sein.

Gemäß einer weitergehenden Ausführungsform der Erfindung ist vorgesehen, daß durch das Endgerät des Nutzers die erste Telekommunikationsleitung etablierbar ist, um auf den Betriebszustand einer Anlage Eingriff nehmen zu können. Dies hat den Vorteil, daß bei auftretenden kritischen Betriebszuständen beispielsweise die Anlage aus der Ferne abgeschaltet werden kann. Auch ist es möglich, die Anlage auf sich ändernde Bedingungen, entsprechend einzustellen. Eine Fernbedienung ist daher zumindest in Grenzen möglich, so daß Betriebsanpassungen vorab schnell und zeitnah durchgeführt werden können.

Selbstverständlich ist es zweckmäßig, wenn zumindest die Etablierung der ersten Telekommunikationsleitung durch ein Codierungs- und Decodierungsmittel geschützt ist. Auch die Etablierung der zweiten Telekommunikationsleitung kann durch ein Codierungs- und Decodierungsmittel geschützt werden. Dies kann entweder eine Zugriffskontrolle umfassen oder aber auch eine codierte Übersendung der Datensätze, die nur mit einer abgestimmten Software anlagen- und nutzerseitig gelesen werden kann. Hierdurch wird nicht nur ein Angriff auf die zu überwachende Anlage sondern auch eine Einsicht in die Datensätze und Betriebszustände auf autorisierte Personen beschränkt. Weiterhin ist es zweckmäßig, wenn der Eingriff auf den Betriebszustand einer Anlage über die zentrale Datenverarbeitungsanlage mit einem anderen Code geschützt ist als der Zugriff auf das Speichermittel. Hierdurch kann eine Hierarchie gebildet werden derart, daß bestimmte Nutzer nur Zugriff auf die im Speichermittel abgelegten Datensätze, bestimmte Nutzer Zugriff auch auf den aktuellen Betriebszustand über die erste und zweite Telekommunikationsleitung und bestimmte Nutzer zudem die Möglichkeit eines Eingriffs auf die Anlage selbst haben. Die Manipulationssicherheit wird hierdurch weiter erhöht.

Weiterhin kann vorgesehen werden, daß die erste Telekommunikationsleitung für den Abruf das Datensatzes über den aktuellen Betriebszustand und/oder für einen Eingriff in den Betriebszustand einer Anlage unmittelbar über die zentrale Datenverarbeitungsanlage durchführbar ist. Dies ermöglicht, daß die zentrale Datenverarbeitungsanlage beispielsweise in einer zentralen Überwachungsstation angeordnet ist. Diese Station kann ständig mit Personal besetzt sein. Tritt nun in der einer oder anderen Anlage ein kritischer Betriebszustand auf, der beispielsweise durch eine Alarmmeldung angezeigt wird, kann das Personal unmittelbar auf diese Anlage Eingriff nehmen.

Weiterhin kann vorgesehen werden, daß durch das Endgerät eines Nutzers eine weitere zweite Telekommunikationsleitung etablierbar ist, um mit einem Endgerät eines anderen Nutzers zu kommunizieren und/oder um einen abgerufenen Datensatz einer Anlage zu übermitteln. Hierdurch wird erreicht, daß beispielsweise kritische Betriebszustände von einem Nutzer, der beispielsweise Bereitschaft hat, zu einem anderem Nutzer, der in der Nähe der betreffenden Anlage stationiert ist, übermittelt werden können. Auch hierdurch kann die Zeit für die Fehlerentdeckung und die Fehlerbehebung weiter reduziert werden.

Weiterhin es ist zweckmäßig, wenn die Aus- und/oder Eingabeeinheit der Anlage ein Endgerät umfaßt, und/oder wenn das Endgerät an die Aus- und/oder Eingabeeinheit der Anlage anschließbar ist, um manuell eine erste Telekommunikationsleitung zur zentralen Datenverarbeitungsanlage und/oder auch eine zweite Telekommunikationsleitung zu einem Endgerät eines Nutzers zu etablieren. Dies hat den Vorteil, daß vor Ort eine On-Line-Verbindung zu einem anderen Nutzer aufgebaut werden kann, der beispielsweise die Wartung überwacht und/oder entsprechende Anleitungen geben kann.

Selbstverständlich ist es möglich, daß mehrere zentrale Datenverarbeitungsanlagen über wenigstens eine dritte Telekommunikationsleitung in Verbindung stehen. Hierdurch kann ein Überwachungsnetzwerk aufgebaut werden, durch welches auch sehr weit entfernte einzelne Anlagen in Gruppen zusammengefaßt werden können und beispielsweise durch einen zentralen Server beobachtet und bedient werden können.

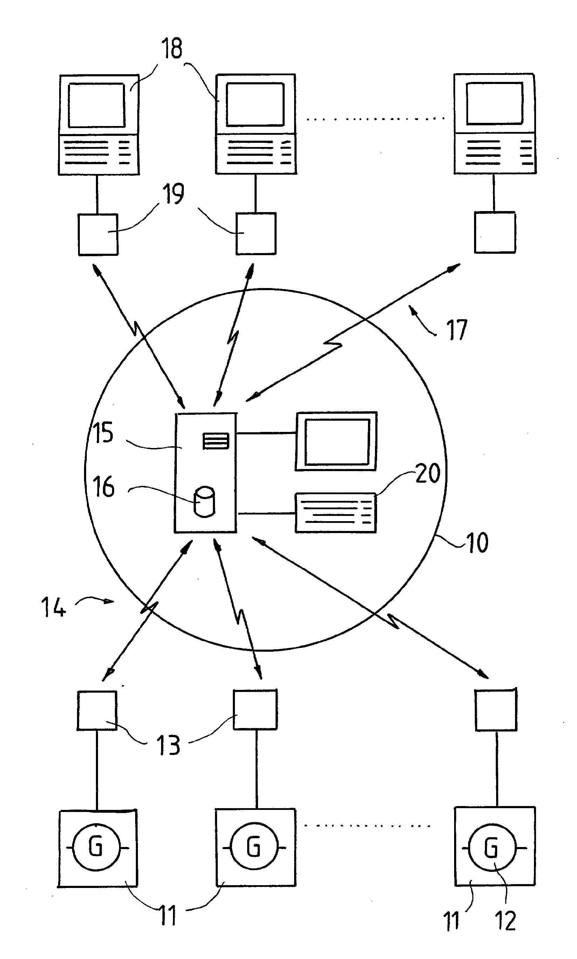

Die Erfindung wird im folgenden anhand der Zeichnung näher erläutert, deren einzige Figur ein schematisches Blockschaltbild des Systems zur Überwachung von räumlich entfernt angeordneten Anlagen zeigt.

Es ist eine Vielzahl von automatisch arbeitenden Anlagen 11 vorgesehen, die beispielsweise als autarke Energieerzeugungsanlagen ausgebildet sind und örtlich verteilt, beispielsweise auf einem großen Areal angeordnet sind. Jede Anlage umfaßt wenigstens ein Generator 12, der Strom in ein nicht dargestelltes Energieversorgungsnetz einleitet. Die automatisierten Anlagen umfassen in üblicher Weise eine Systemsteuerung, die bestimmte Daten des Betriebszustandes erfaßt und anzeigt. Es ist vorgesehen, daß diese Daten als Datensätze abrufbar und übertragbar sind.

Es sind dafür Aus- und/oder Eingabeeinheiten 13 vorgesehen, die über eine etablierbare erste Telekommunikationsleitung 14 in Verbindung mit einer zentralen Datenverarbeitungsanlage 15 bringbar sind. Diese Telekommunikationsleitung kann ein vorhandenes Telekommunikationsnetzwerk und dessen Einrichtungen, insbesondere Satelliten- und Funk- sowie Kabelübertragungsstrecken, umfassen.

Die zentrale Datenverarbeitungsanlage 15 ist in der Lage, diese erste Telekommunikationsleitung 14 aufzubauen, um beispielsweise die Datensätze der Betriebszustände der angeschlossenen Anlagen 11 periodisch und/oder zu vorgebbaren Zeiten zu erfassen. Die Datenverarbeitungsanlage 15 umfaßt dazu entsprechende Zeitgeber und Auswerteeinheiten oder entsprechende Routinen, die in Form einer Software implementiert sind. Ferner ist ein Speichermittel 16 vorhanden, in das die Datensätze abgelegt werden.

Die zentrale Datenverarbeitungsanlage 15 kann über etablierbare zweite Telekommunikationsleitungen 17 in Verbindung mit Endgeräten 18 eines Nutzers in Verbindung gebracht werden. In der Zeichnung sind diese Endgeräte 18 als PC's dargestellt, jedoch kann ein solches Endgerät auch als Telefaxgerät, Telefon, Mobilfunktelefon oder dergleichen ausgebildet sein. Es sind entsprechende Telekommunikationseinrichtungen 19 vorhanden, mit der die betreffende zweite Telekommunikationsleitung 17 zwischen zentraler Datenverarbeitungsanlage 15 und Endgerät 18 aufbaubar ist. Hierdurch ist es möglich, beispielsweise auf die im Speicher 16 abgelegten Datensätze der Anlagen 11 Zugriff zu nehmen. Auch die zweite Telekommunikationsleitung 17 kann ein vorhandenes Telekommunikationsnetzwerk und dessen Einrichtung, insbesondere Satelliten- und Funk- sowie Kabelübertragungsstrecken umfassen. Insbesondere ist vorgesehen, daß die zu überwachende Anlagen, die zentrale Datenverarbeitungsanlage und der Nutzer Teilnehmer eines Netzwerkes 10 sind, das von unbeteiligten Dritten jedoch nicht zugänglich ist. Die Verbindung der zentralen Datenverarbeitungsanlage zum Netzwerk kann als Standleitung ausgebildet sein, während die Verbindungen zu den Endgeräten der Nutzer oder zu den Aus- und/oder Eingabeeinheiten 13 der Anlagen erst bei Bedarf etabliert werden.

Es wird ein Überwachungssystem geschaffen, das aus zwei unabhängigen Telekommunikationsleitungen 14,17 besteht. Sofern die Datensätze des Betriebszustandes einer Anlage nur abgerufen werden sollen, wird nur die Telekommunikationsleitung 17 und ein entsprechender Zugriff auf den Speicher 16 benötigt. Grundsätzlich ist es natürlich auch möglich, daß über das Endgerät 18 und die Telekommunikationseinrichtung 19 eine zweite Telekommunikationsleitung 17 zu der zentralen Datenverarbeitungsanlage 15 und von dort eine erste Telekommunikationsleitung 14 über die Aus- und/oder Eingabeeinheit 13 zu einer der Anlagen 11 aufgebaut wird. Hierdurch ist es entweder möglich, den aktuellen Betriebszustand der Anlage abzurufen, oder aber um Eingriff auf diese Anlage nehmen zu können.

Weiterhin kann vorgesehen werden, daß die Aus- und/oder Eingabeeinheit 13 und/oder die Anlage eine Alarmfunktion umfaßt, die bei Überschreiten bestimmter Grenzwerte die erste Telekommunikationsleitung 14 aufbaut, um einen Alarm an die zentrale Datenverarbeitungsanlage 15 zu übermitteln. Hier kann entweder unmittelbar über die Bedieneinrichtung 20 auf die Anlage im Alarmzustand Eingriff genommen werden, oder es kann eine zweite Telekommunikationsleitung 17 zu einem Endgerät 18 eines Nutzers aufgebaut werden. Es kann vorgesehen werden, daß der Alarm beispielsweise auf ein Mobilfunktelefon gesendet wird, das in Form einer SMS-Nachricht den Ort und den Standpunkt der betreffenden Anlage übermittelt. Der Nutzer ist dann in der Lage, über seinen PC die kritischen Betriebszustände abrufen zu können und schnell Maßnahmen einzuleiten. Selbstverständlich ist aber auch möglich, daß beim Auslösen des Alarms entweder durch die Anlage beziehungsweise deren Aus- und/oder Eingabeeinheit oder durch die Auswerteeinheit der zentralen Datenverarbeitungsanlage 15 der angewählte Nutzer über die erste und zweite Telekommunikationsleitung unmittelbar mit der betreffenden Anlage verbunden wird.

Es ist offensichtlich, daß durch ein solches System die Überwachung und/oder die Bedienung von automatisierten Anlagen wesentlich vereinfacht werden kann. Durch die freie Editierbarkeit der zeitlichen Intervalle und des Umfangs für die Abfrage der Datensätze oder nur der alarmrelevanten Daten kann die Menge der zu verarbeitenden und auch zu prüfenden Daten auf ein gewünschtes Maß reduziert oder erweitert werden. Zudem kann durch die automatische und periodisch Abfrage die Funktion der Telekommunikationsleitung geprüft werden. Sofern der Aufbau einer Verbindung nicht möglich ist, kann vorgesehen werden, unmittelbar einen Alarm auszulösen. Insbesondere ist jedoch gewährleistet, daß eine Manipulation von nicht autorisierten Dritten weitestgehend vermieden werden kann. Die Telekommunikationsleitungen 14 und 17 bedienen sich eines von außen unzugänglichen Telekommunikationsnetzwerkes, so daß ein Dritter keine Möglichkeit hat, auf die Datenübertragung Einfluß zu nehmen. Die Verwendung eines Telekommunikationsnetzwerks hat zudem den Vorteil, daß auf die zentrale Datenverarbeitungsanlage 15 über die Telekommunikationsleitung 14 bzw. 17 mehrere Nutzer gleichzeitig auf mehrere Anlagen Zugriff haben können. Auch ist es möglich, daß mehrere Anlagen simultan mit der zentralen Datenverarbeitungsanlage verbunden sind, um deren Datensätze zu überspielen. Ferner kann jede Telekommunikationsleitung und jeder Zugriff durch einen Code geschützt werden, der in der zentralen Datenverarbeitungsanlage 15 abgelegt ist. So ist es möglich, die Zugriffe und/oder Eingriffe nur bestimmten Nutzern zu ermöglichen.

## Patentansprüche

1. System zum Überwachen und Bedienen von einer Vielzahl von automatisch arbeitenden Anlagen (11), insbesondere von örtlich verteilten Energieerzeugungsanlagen, mit wenigstens einer zentralen Datenverarbeitungsanlage (15) mit wenigstens einem Speichermittel (16), die über wenigstens eine erste etablierbare Telekommunikationsleitung (14) mit wenigstens einer Aus- und/oder Eingabeeinheit (13) der zu überwachenden und/oder zu bedienenden Anlage (11) in Verbindung bringbar ist, um wenigstens einen Datensatz über den Betriebszustand der Anlage an die Datenverarbeitungsanlage zu übermitteln und in dem Speichermittel abzulegen, und die über wenigstens eine zweite Telekommunikationsleitung (17) mit wenigstens einem Ein- und Ausgabeendgerät (18) eines Nutzers in Verbindung bringbar ist, durch welches Endgerät der Zugriff zumindest auf das Speichermittel (16) zum Abrufen des Datensatzes der Anlage möglich ist.

2. System nach Anspruch 1, **dadurch gekennzeichnet, daß** die zentrale Datenverarbeitungsanlage (15) wenigstens einen Zeitgeber und/oder eine Routine umfaßt, um periodisch und/oder zu vorgebbaren Zeiten die Datensätze der Anlagen (11) abzurufen und in dem Speichermittel (16) abzulegen.

3. System nach einem der Ansprüche 1 oder 2, **dadurch gekennzeichnet, daß** die zentrale Datenverarbeitungsanlage (15) wenigstens eine Auswerteeinheit umfaßt, um die abgerufenen Datensätze der Anlagen auszuwerten und/oder aufzubereiten, und daß die ausgewerteten und/oder aufbereiteten Datensätze in dem Speichermittel für den Zugriff durch den Nutzer abgelegt werden.

4. System nach einem der Ansprüche 1 bis 3, **dadurch gekennzeichnet, daß** die Auswerteeinheit und/oder die zentrale Datenverarbeitungsanlage (15) eine Alarmfunktion umfaßt, die bei Überschreiten vorgebbarer Grenzwerte wenigstens einen Nutzer zum Auslösen eines Alarms über die zweite Telekommunikationsleitung anwählt.

5. System nach einem der Ansprüche 2 bis 4, **dadurch gekennzeichnet, daß** die zentrale Datenverarbeitungsanlage wenigstens einen zweiten Zeitgeber und/oder eine zweite Routine umfaßt, um periodisch und/oder zu vorgebbaren Zeiten eine vorgebbare Auswahl von Daten der Anlagen (11) abzurufen, auf einen Alarmzustand hin zu überprüfen und in dem Speichermittel (16) abzulegen.

6. System nach einem der Ansprüche 1 bis 5, **dadurch gekennzeichnet, daß** die Aus- und/oder Eingabeeinheit (13) der Anlage ein Speichermittel umfaßt, in dem die Datensätze zum Abruf durch die zentrale Datenverarbeitungsanlage ablegbar sind.

7. System nach einem der Ansprüche 1 bis 6, **dadurch gekennzeichnet, daß** die zentrale Datenverarbeitungsanlage (15) von der Aus- und/oder Eingabeeinheit (13) der Anlage selbsttätig und/oder manuell anwählbar ist.

8. System nach einem der Ansprüche 1 bis 7, **dadurch gekennzeichnet, daß** die Aus- und/oder Eingabeeinheit eine Alarmfunktion umfaßt, die bei Überschreiten vorgebbarer Grenzwerte die zentrale Datenverarbeitungsanlage zum Auslösen eines Alarms über die erste Telekommunikationsleitung anwählt.

9. System nach einem der Ansprüche 1 bis 8, **dadurch gekennzeichnet, daß** der Alarm von der zentralen Datenverarbeitungsanlage (15) an wenigstens ein Endgerät (18) eines Nutzers unmittelbar weitergeleitet wird.

10. System nach einem der Ansprüche 1 bis 9, **dadurch gekennzeichnet, daß** beim Auslösen des Alarms entweder durch die Anlage beziehungsweise deren Aus- und/oder Eingabeeinheit (13) oder durch die Auswerteinheit der zentralen Datenverarbeitungsanlage (15) der angewählte Nutzer über die erste und zweite Telekommunikationsleitung unmittelbar mit der betreffenden Anlage verbunden wird.
